(19) **Europäisches Patentamt**
**European Patent Office**
**Office européen des brevets**

(11) **EP 3 893 300 B1**

(12) **EUROPEAN PATENT SPECIFICATION**

(45) Date of publication and mention
of the grant of the patent:
**09.08.2023 Bulletin 2023/32**

(21) Application number: **20168381.0**

(22) Date of filing: **07.04.2020**

(51) International Patent Classification (IPC):
**H01M 8/0202** (2016.01)   **H01M 8/0271** (2016.01)
**H01M 8/0286** (2016.01)   **H01M 8/243** (2016.01)
**H01M 8/124** (2016.01)   **H01M 8/12** (2016.01)

(52) Cooperative Patent Classification (CPC):
**H01M 8/0202; H01M 8/0271;** H01M 8/0286;
H01M 8/243; H01M 2008/1293; Y02E 60/50;
Y02P 70/50

(54) **FLAT TUBULAR SOLID OXIDE FUEL CELL OR WATER ELECTROLYSIS CELL WITH INTEGRATED CURRENT COLLECTOR AND MANUFACTURING METHOD OF THE SAME**

FLACHE ROHRFÖRMIGE FESTOXIDBRENNSTOFFZELLE ODER WASSERELEKTROLYSEZELLE MIT INTEGRIERTEM STROMKOLLEKTOR UND HERSTELLUNGSVERFAHREN DAFÜR

PILE À COMBUSTIBLE D'OXYDE SOLIDE TUBULAIRE PLATE OU CELLULE D'ÉLECTROLYSE DE L'EAU AVEC COLLECTEUR DE COURANT INTÉGRÉ ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.10.2021 Bulletin 2021/41**

(73) Proprietor: **Korea Institute of Energy Research Daejeon 34129 (KR)**

(72) Inventors:
• **KIM, Tae Woo**
**34049 Daejeon (KR)**
• **WOO, Sang Kuk**
**34071 Daejeon (KR)**
• **KIM, Sun Dong**
**30126 Sejong-si (KR)**
• **SEO, Doo Won**
**34071 Daejeon (KR)**
• **BANG, Hyung Joon**
**34140 Daejeon (KR)**
• **HAN, In Sub**
**32911 Nonsan-si, Chungcheongnam-do (KR)**

• **KIM, Se Young**
**34140 Daejeon (KR)**
• **KIM, Soo Hyun**
**30100 Sejong-si (KR)**
• **SEONG, Young Hoon**
**35215 Daejeon (KR)**
• **BYUN, Segi**
**30130 Sejong-si (KR)**
• **CHOI, Yoonseok**
**35221 Daejeon (KR)**
• **HWANG, Hyo Jung**
**35401 Daejeon (KR)**

(74) Representative: **Viering, Jentschura & Partner mbB**
**Patent- und Rechtsanwälte**
**Am Brauhaus 8**
**01099 Dresden (DE)**

(56) References cited:
**KR-B1- 101 826 821**   **US-A1- 2004 185 321**
**US-A1- 2013 025 292**   **US-A1- 2013 149 631**
**US-A1- 2016 372 778**

**EP 3 893 300 B1**

## Description

## BACKGROUND

### Field

The present disclosure relates to a solid oxide fuel cell or water electrolysis cell, and more particularly, to a solid oxide fuel cell or water electrolysis cell using an integrated current collector and a manufacturing method of the same.

### Description of the Related Art

A solid oxide fuel cell (SOFC) is a fuel cell which uses solid oxide with oxygen or hydrogen ion conductivity as electrolytes and operates at the highest temperature (600 to 1000°C) among existing fuel cells. Further, all components are made of solid so that the structure of the solid oxide fuel cell is simpler than the other fuel cells. Further, the solid oxide fuel cell does not have electrolyte loss, replenishment, corrosion problems and does not need a precious metal catalyst so that the fuel may be directly supplied therein through internal reforming. The solid oxide fuel cell reversely performs an electrochemical reaction to be used as a high temperature hydroelectrolyzer (solid oxide electrolyzer cell: SOEC).

The electrochemical reactors such as a solid oxide fuel cell and a high temperature hydroelectrolyzer are mainly classified into a flat type and a cylindrical type depending on the shape. The flat type has an advantage of a high power density (output), but also has disadvantages in that a gas sealing area is large, a thermal shock is caused by a difference in thermal expansion coefficients between materials during the lamination, and it is not easy to increase a size. Further, the cylindrical type has advantages in that the resistance against the thermal stress and the mechanical strength are relatively high and it is possible to increase the size using extrusion molding, but also has a limitation in that the power density (output) is low.

A flat tubular electrochemical reactor (a flat tubular solid oxide fuel cell) which introduces the advantages of the flat type and cylindrical type electrochemical reactors may implement a desired output performance by laminating a plurality of unit cells (single cells or unit cells) to increase a power density.

However, due to the load distribution problem caused in accordance with the lamination of the plurality of cells, a slippage of the sealant formed in a portion where a cell stack is sealed may occur, so that gas leakage and heat generation are generated to collapse the stack stability, which degrades the performance of the cell.

Accordingly, there is a need for development of a technology for performing electrical contact between unit cells and gas sealing between a fuel electrode and an air electrode.

[Related Art Document]

[Patent Document]

Korean Registered Patent Publication No. 10-1503458 (Published on March 11, 2015).

US 2016/372778 A1 discloses a flat-plate-type fuel cell stack including a plurality of plate-shaped stacked fuel cells each including an electrolyte layer, an anode, and a cathode. The fuel cell stack includes at least one of a fuel manifold communicating with a space adjacent to the anode and an oxidant manifold communicating with a space adjacent to the cathode. A compression seal member and a glass seal member are disposed around the at least one manifold.

US 2004/1 85321 A1 discloses that a solid oxide fuel cell stack having a compression plate and a terminal fuel cell includes a current collector plate comprising a substantially solid planar element disposed immediately adjacent the compression plate; an gas-impermeable interconnect plate disposed immediately adjacent and in electrical contact with the terminal fuel cell; and a compressible electrically conductive element in electrical contact with the interconnect plate and the current collector plate.

## SUMMARY

An object of the present disclosure is to provide a solid oxide fuel cell or water electrolysis cell using an integrated current collector which prevents wobbling and slipping phenomenon caused by a load due to the stack lamination, by laminating cell stacks of s solid oxide fuel cell with a current collector in which a filler equipped in a sealing unit is integrally formed.

Further, another object of the present disclosure is to provide a solid oxide fuel cell or water electrolysis cell using an integrated current collector which increases a convenience for manufacturing a cell stack and a structural stability by shortening a coupling process of a sealing unit.

Technical problems of the present disclosure are not limited to the above-mentioned technical problem(s), and other technical problem(s), which is (are) not mentioned above, can be clearly understood by those skilled in the art from the following descriptions.

A solid oxide fuel cell using an integrated current collector according to claim 1 is provided. Further embodiments are described in the dependent claims. A solid oxide fuel cell using an integrated current collector includes at least one unit cell including a fuel electrode, an electrolyte film, and an air electrode; a first current collector and a second current collector which are provided on both surfaces of the at least one unit cell and have a filling unit integrally formed at both ends of a body; and a sealing unit formed on both surfaces of the filling unit.

Further, the solid oxide fuel cell using an integrated current collector according to an exemplary embodiment of the present disclosure may further include: a first housing formed on the other surface of the first current collector and a second housing formed on one surface of the second current collector to support the at least one unit cell.

Further, according to one exemplary embodiment of the present disclosure, the filling unit and the sealing unit include a hole formed to penetrate in a thickness direction to move fuel gas flowing to the at least one unit cell therethrough, and a hole equipped in the filling unit and a hole equipped in the sealing unit may communicate with each other.

A thickness of the first current collector or the second current collector satisfies the following Equation 1.

[Equation 1]

$$\text{Thickness of first current collector or second current collector} = \text{Thickness of filling unit} +$$

$$(\text{Thickness of sealing unit} \times 2)$$

Further, according to one exemplary embodiment of the present disclosure, the sealing unit may be formed on both surfaces of the filling unit using one of a bonding process, a screen printing process, and a dispenser process.

The solid oxide fuel cell is a flat tubular type.

Further, a manufacturing method of a solid oxide fuel cell using an integrated current collector according to claim 5 is provided. Further embodiments are described in the dependent claims. A manufacturing method of a solid oxide fuel cell using an integrated current collector is a manufacturing method of a solid oxide fuel cell including at least one unit cell in which a fuel electrode, an electrolyte film, and an air electrode are laminated. The method includes: preparing a first current collector and a second current collector in which a filling unit is integrally formed at both ends of a body; coupling a sealing unit onto both surfaces of the filling unit; and coupling the first current collector and the second current collector onto both surfaces of the at least one unit cell to manufacture the solid oxide fuel cell.

Further, the manufacturing method of a solid oxide fuel cell using an integrated current collector according to the exemplary embodiment of the present disclosure may further include: coupling a first housing onto the other surface of the first current collector and coupling a second housing onto one surface of the second current collector to support the at least one unit cell.

Further, according to one exemplary embodiment of the present disclosure, during the coupling of a sealing unit onto both surfaces of the filling unit, one of a bonding process, a screen printing process, and a dispenser process may be used.

Further, a thickness of the first current collector or the second current collector satisfies the following Equation 1.

[Equation 1]

$$\text{Thickness of first current collector or second current collector} = \text{Thickness of filling unit} +$$

$$(\text{Thickness of sealing unit} \times 2)$$

A solid oxide water electrolysis cell using an integrated current collector according to another exemplary embodiment of the present disclosure includes at least one unit cell including a hydrogen electrode, an electrolyte film, and an air electrode, a first current collector and a second current collector which are provided on both surfaces of the at least one unit cell and have a filling unit integrally formed at both ends of a body, and a sealing unit formed on both surfaces of the filling unit.

Specific items of other embodiments are included in the detailed description and the drawings.

According to the exemplary embodiment of the present disclosure, the cell stack of the solid oxide fuel cell is laminated by implementing a current collector in which a filler equipped in a sealing unit is integrally formed, to prevent wobbling and slipping phenomenon caused by a load due to the stack lamination.

According to the exemplary embodiment, the coupling process of the sealing unit is shortened to enhance the convenience for manufacturing the cell stack and the structural stability.

**BRIEF DESCRIPTION OF THE DRAWINGS**

The above and other aspects, features and other advantages of the present disclosure will be more clearly understood from the following detailed description taken in conjunction with the accompanying drawings, in which:

FIG. 1 is a view illustrating an assembling component of a cell stack used in the related art;
FIG. 2 is a plan view illustrating an integrated current collector according to an exemplary embodiment of the present disclosure;
FIG. 3 is an exploded perspective view illustrating a solid oxide fuel cell equipped with a separable current collector used in the related art;
FIG. 4 is an exploded perspective view illustrating a solid oxide fuel cell with an integrated current collector according to an exemplary embodiment of the present disclosure;
FIGS. 5A to 5C are cross-sectional views illustrating structures of a filling unit and a sealing unit formed at both ends of an integrated current collector, according to an exemplary embodiment of the present disclosure;
FIG. 6 is a flowchart illustrating a manufacturing method of a solid oxide fuel cell using an integrated current collector according to an exemplary embodiment of the present disclosure; and
FIGS. 7 and 8 are flowcharts illustrating a manufacturing method of a solid oxide fuel cell of FIG. 6 in detail.

**DETAILED DESCRIPTION OF THE PREFERRED EMBODIMENT**

Advantages and characteristics of the present disclosure and/or a method of achieving the advantages and characteristics will be clear by referring to exemplary embodiments described below in detail together with the accompanying drawings. However, the present disclosure is not limited to the following exemplary embodiments but may be implemented in various different forms. The exemplary embodiments are provided only to complete the disclosure of the present disclosure and to fully provide a person having ordinary skill in the art to which the present disclosure pertains with the category of the disclosure, and the present disclosure will be defined by the appended claims. Like reference numerals indicate like elements throughout the specification.

Generally, a fuel cell is a high efficiency clean power generation technology which directly converts hydrogen contained in a hydrocarbon-based material such as natural gas, coal gas, and methanol and oxygen in the air into electrical energy by electrochemical reaction and is largely classified into an alkali type, a phosphate type, a molten carbonate, a solid oxide, and polymer fuel cells depending on a type of used electrolyte.

A solid oxide fuel cell (SOFC) is a fuel cell which uses solid oxide with oxygen or hydrogen ion conductivity as electrolytes and operates at the highest temperature (600 to 1000°C) among existing fuel cells. Further, all components are made of solid so that the structure of the solid oxide fuel cell is simpler than the other fuel cells. Further, the solid oxide fuel cell does not have electrolyte loss, replenishment, corrosion problems and does not need precious metal catalyst so that the fuel may be directly supplied therein through internal reforming. The solid oxide fuel cell reversely performs an electrochemical reaction to be used as a high temperature solid oxide electrolyzer cell (SOEC).

The electrochemical reactors such as a solid oxide fuel cell and a high temperature hydroelectrolyzer are mainly classified into a flat type and a cylindrical type depending on the shape. The flat type has an advantage of a high power density (output), but also has disadvantages in that a gas sealing area is large, a thermal shock is caused by a difference in thermal expansion coefficients between materials during the lamination, and it is not easy to increase a size. Further, the cylindrical type has advantages in that the resistance against the thermal stress and the mechanical strength are relatively high and it is possible to increase the size using extrusion molding, but also has a limitation in that the power density (output) is low.

A flat tubular electrochemical reactor (a flat tubular solid oxide fuel cell) which introduces the advantages of the flat type and cylindrical type electrochemical reactors may implement a desired output performance by laminating a plurality of unit cells (single cells or unit cells) to increase a power density.

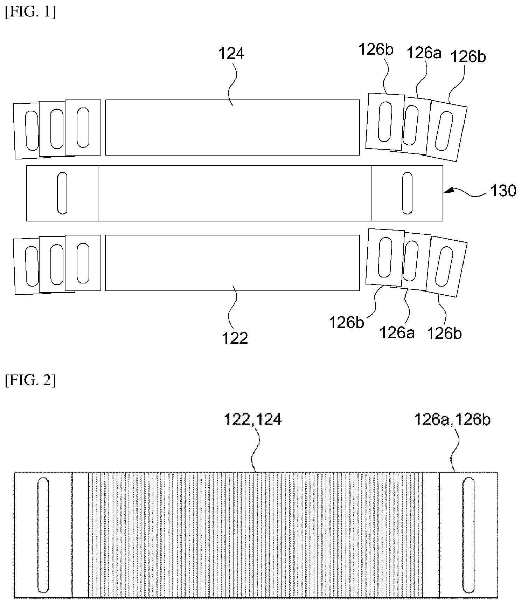

Referring to FIG. 1, a flat tubular fuel cell of the related art implements a cell stack by bonding separate current collectors 122 and 124 and sealants 126b to unit cells 130 to achieve the electrical contact between unit cells and sealing of the fuel gas between a fuel electrode and an air electrode.

In this case, when the sealant 126b having a height corresponding to a thickness of the current collectors 122 and 124, a filler 126a is used to fill the height difference to prevent the deformation of the sealant 126b due to the temperature rise in accordance with the operation of the fuel cell.

However, there is no problem when a small number of unit cells 130 is laminated, but when dozens of unit cells 130 are laminated to manufacture a large capacity of cell stack with a kW level, the sealant 126b and the filler 126a may slip and move. Therefore, the stability of the cell stack collapses to degrade the performance of the fuel cell.

Therefore, according to the present disclosure, as illustrated in FIG. 2, parts of the current collectors 122 and 124 are implemented as a filler 126a to prevent the wobbling and slipping phenomenon which may be caused after melting the sealant 126b. That is, the current collector and the filler which have been separately used in the related art are integrally manufactured.

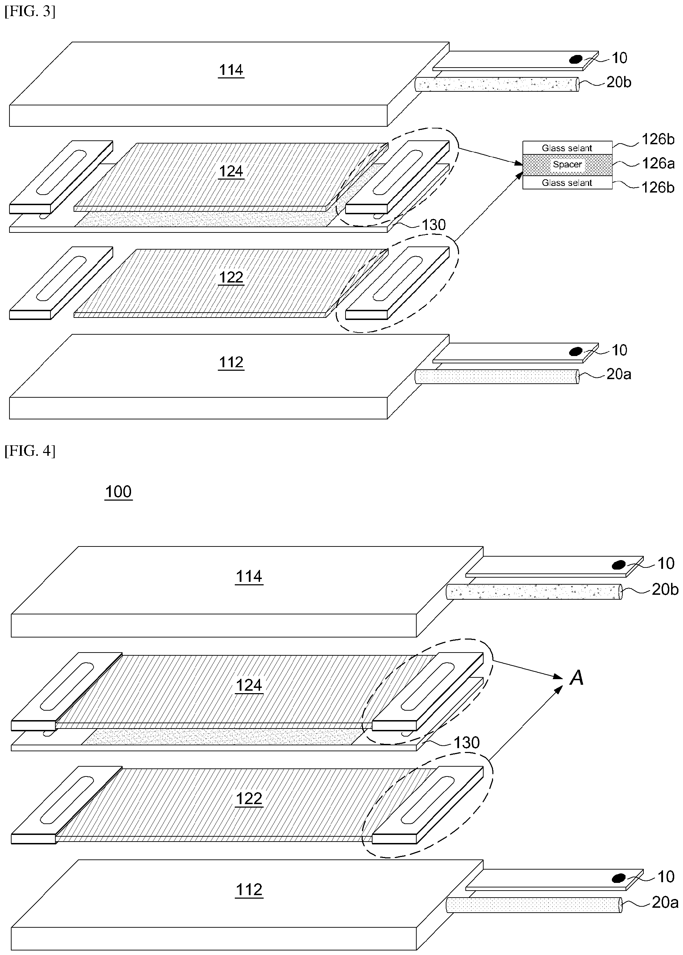

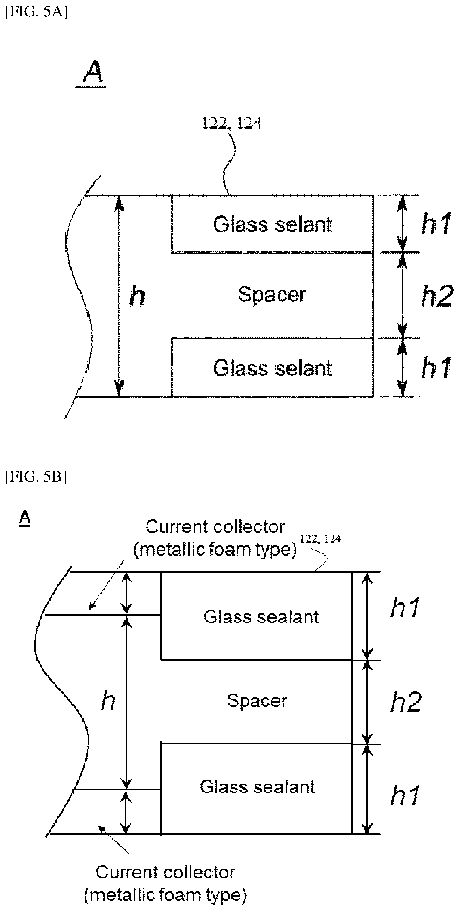

FIG. 3 is an exploded perspective view illustrating a solid oxide fuel cell equipped with a separable current collector used in the related art, FIG. 4 is an exploded perspective view illustrating a solid oxide fuel cell with an integrated current collector according to an exemplary embodiment of the present disclosure, and FIGS. 5A to 5C are cross-sectional views illustrating structures of a filling unit and a sealing unit formed at both ends of an integrated current collector, according to an exemplary embodiment of the present disclosure.

Referring to FIG. 3, a solid oxide fuel cell equipped with a separable current collector used in the related art includes at least one unit cell 130, current collectors 122 and 124, a sealing unit 126b, a gas inlet 20a, a gas outlet 20b, and housings 112 and 124.

The flat tubular solid oxide fuel cell is classified into two types: an air electrode support type fuel cell which uses an air electrode (a cathode) as a support of the fuel cell and a fuel electrode support type fuel cell which uses a fuel electrode (an anode) as a support. Between the air electrode support type fuel cell and the fuel electrode support type fuel cell, the fuel electrode support type is an advanced type so that the current solid oxide fuel cell is being studied and developed with respect to the fuel electrode support type.

Hereinafter, the fuel electrode support type fuel cell will be mainly described.

At least one unit cell 130 may be configured by sequentially laminating a fuel electrode, an electrolyte film, and an air electrode from an inside (or a lower side).

In the air electrode, electrons supplied from the outside and oxygen or oxygen gas in the air react with each other to form oxygen ions. The electrolyte film serves as a moving passage of oxygen ions formed in the air electrode and block the direct contact between air and the fuel and block the movement of the electrons. Further, the fuel electrode serves to send electrons generated when the oxygen ion transmitted through the electrolyte film and the fuel cause electrochemical reaction, to the outside.

Specifically, the fuel electrode is supplied with oxygen or oxygen gas in the air and the electron supplied from the fuel electrode is combined with the oxygen to form an oxygen ion. When the oxygen ion moves through the electrolyte film to reach the fuel electrode, the oxygen ion reacts with hydrogen gas which is a fuel to generate water and discharge electrons. As a result, the electrons generated in the fuel electrode flow to the external circuit to generate current to generate electricity.

For reference, holes which are formed to penetrate in a thickness direction are formed at both ends of the unit cell 130 to introduce and discharge the fuel gas.

The current collectors 122 and 124 include terminals which collect electricity to collect electricity formed in at least one unit cell 130.

The current collectors 122 and 124 may include a first current collector 122 located on a lowermost portion of at least one unit cell 130 and a second current collector 124 located on an uppermost portion of at least one unit cell 130.

In this case, in accordance with the structure of the unit cell 130 in which the fuel electrode, the electrolyte film, and the air electrode are sequentially laminated from the inside (or a lower side), the first current collector 122 may be a fuel electrode layer current collector and the second current collector 124 may be an air electrode layer current collector.

In the drawing, a structure of the fuel cell configured by one unit cell 130 has been illustrated and the first current collector 122 and the second current collector 124 may be coupled onto both surfaces of the unit cell 130.

In contrast, when a plurality of unit cells 130 is laminated, the first current collector 122 is coupled to a lower portion of the lowermost unit cell 130 and the second current collector 124 is coupled to an upper portion of the uppermost unit cell 130.

The sealing units 126b are formed on both ends of the unit cell 130 and is provided in a position spaced apart from the current collectors 122 and 124 with a predetermined interval. That is, the sealing units 126b may be formed on upper portion and lower portion of both ends of the unit cell 130 and may be equipped in the unit cell 130 to be separated from the current collectors 122 and 124.

The sealing unit 126b may include a filling unit 126a to fill the height difference to prevent the deformation of the sealant due to the temperature rise in accordance with the operation of the fuel cell.

That is, the sealing unit 126b may be implemented such that sealing members are coupled onto both surfaces of the filling unit 126a. For reference, as the sealing member, a glass sealant may be used, and, as the filling unit 126a, crofer or yttria stabilized zirconia (YSZ) may be used.

The housings 112 and 114 are frames used to support at least one unit cell 130 and may be formed at the outside of the current collectors 122 and 124.

For example, the housings 112 and 114 includes a first housing 112 coupled to the other surface, that is, a lower portion of the first current collector 122 and a second housing 114 which is coupled to one surface, that is, an upper portion of the second current collector 124.

The housings 112 and 114 are desirably implemented by a metal material which minimizes deformation at a high temperature.

In the housings 112 and 114, a gas inlet which introduces fuel gas flowing to the unit cell 130 and a gas outlet which discharges the fuel gas.

For example, the gas inlet may be connected to the first housing 112 and the gas outlet may be connected to the second housing 114 and the positions of the gas inlet and the gas outlet may be changed in accordance with a laminating order of the fuel electrode, the electrolyte film, and the air electrode of the unit cell 130.

For reference, the first housing 112 and the second housing 114 may further include an electric terminal 10 connected to the outside.

The solid oxide fuel cell of the related art with the above-described structure is configured by the current collectors 122 and 124 and the sealing unit 126b which are separately formed so that the following problems may occur.

There is no problem when a small number of unit cells 130 is laminated in the fuel cell, but when dozens of unit cells 130 are laminated to manufacture a large capacity of cell stack with a kW level, the sealing unit 126b and the filling unit 126a may slip and move. Therefore, the stability of the cell stack collapses to degrade the performance of the fuel cell.

Referring to FIG. 4, a solid oxide fuel cell 100 with an integrated current collector according to an exemplary embodiment of the present disclosure includes at least one unit cell 130, current collectors 122 and 124, a sealing unit 126b, a gas inlet, a gas outlet, and a housing.

The at least one unit cell 130, the gas inlet, the gas outlet, and the housing of the solid oxide fuel cell 100 according to the exemplary embodiment of the present disclosure performs the same functions as the at least one unit cell 130, the gas inlet 20a, the gas outlet 20b, and the housings 112 and 114 of the solid oxide fuel cell of the related art so that only the current collectors 122 and 124 and the sealing unit 126b will be described below.

The current collectors 122 and 124 include terminals which collect electricity to collect electricity formed in at least one unit cell 130.

The current collectors 122 and 124 may include a first current collector 122 located on a lowermost portion of at least one unit cell 130 and a second current collector 124 located on an uppermost portion of at least one unit cell 130.

In this case, in accordance with the structure of the unit cell 130 in which the fuel electrode, the electrolyte film, and the air electrode are sequentially laminated from the inside (or a lower side), the first current collector 122 may be a fuel electrode layer current collector and the second current collector 124 may be an air electrode layer current collector.

In the drawing, a structure of the fuel cell configured by one unit cell 130 has been illustrated and the first current collector 122 and the second current collector 124 may be coupled to both surfaces of the unit cell 130.

In contrast, when a plurality of unit cells 130 is laminated, the first current collector 122 is coupled to a lower portion of the lowermost unit cell 130 and the second current collector 124 is coupled to an upper portion of the uppermost unit cell 130.

In the collectors 122 and 124, filling units 126a may be integrally formed with both ends of the bodies.

That is, unlike the current collectors 122 and 124 of the related art which are implemented to be separated from the filling unit 126a included in the sealing unit 126b, the current collector 122 and 124 of the present disclosure may implement both ends of the body as filling units 126a.

The sealing units 126b may be formed on both surfaces of the filling unit 126a. In other words, the sealing units 126b may be formed to be coupled onto both surfaces of the filling unit 126a.

The filling unit 126a and the sealing unit 126b may include holes which are formed to penetrate in a thickness direction to move a fuel gas flowing to the at least one unit cell 130 therethrough.

In this case, the hole equipped in the filling unit 126a and the hole equipped in the sealing unit 126b may communicate with each other.

A thickness h of the current collectors 122 and 124 may satisfy the following Equation 1 with regard to a thickness h1 of the sealing unit 126b and a thickness h2 of the filling unit 126a.

[Equation 1]

Thickness h of first current collector 122 or second current collector 124 = Thickness h2 of filling unit 126a + (Thickness h1 of sealing unit 126b × 2)

As illustrated in FIGS. 5A and 5B, the thickness of the first current collector 122 or the second current collector 124 may be desirably equal to a thickness obtained by adding all a thickness of the sealing unit 126b formed on a top surface of the filling unit 126a, a thickness of the sealing unit 126b formed on a bottom surface of the filling unit 126a and a thickness of the filling unit 126a. FIGS. 5A and 5B are examples formed with an A-type current collector structure. The A-type current collector is formed such that the first current collector and the second current collector and the filling unit (spacer) are integrally formed as a current collector, and the filling unit which is integrally formed with the first current collector or the second current collector is not a rectangular shape. In this case, as illustrated in FIG. 5A, the integrated current collector may be formed to include only a filler area in which the sealing unit 126b is formed or as illustrated in FIG. 5B, the integrated current collector may be formed such that a filler area in which the sealing unit 126b is formed and a filler area in which a metallic foam is formed are divided.

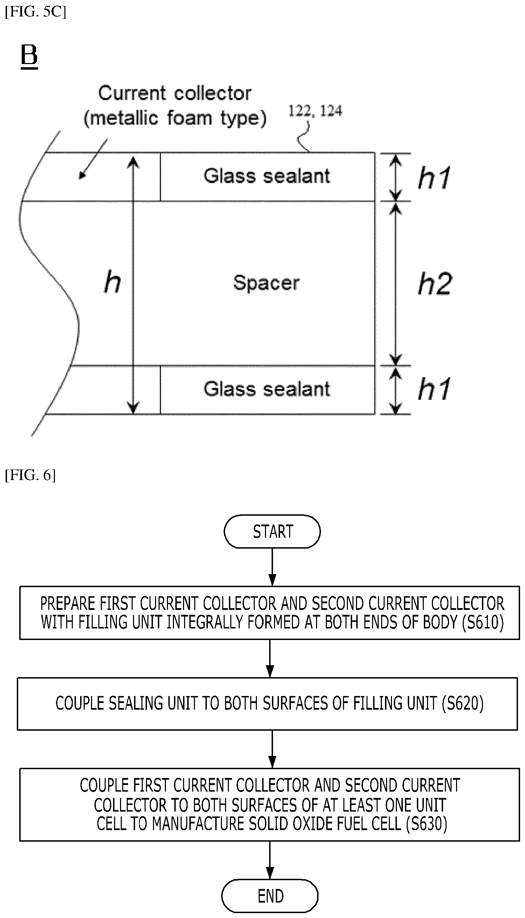

FIG. 5C illustrates a B-type current collector, and the B-type current collector is formed such that the first current collector and the second current collector and a filling unit (spacer) are integrally formed as a current collector, and the integrated current collector has a rectangular shape. Referring to FIG. 5C, the thickness of the sealing unit 126b is the same as the thickness of the metallic foam.

The metallic foam has a high conductivity and sufficient porosity and even though the thickness changes due to the compression of the sealing material, the conduction and gas permeation may be easily performed. Desirably, the metallic foam may be formed by silver (Ag) metallic foam. In this case, the thickness h of the first collector 122 or the second current collector 124 may be a value obtained by adding the thickness h2 of the filling unit 126a and twice the thickness h1 of the sealing unit 126b, and the thickness of the metallic foam may be larger or smaller than h1 depending on whether the current collector is the A type or B type.

Accordingly, since the thickness of the current collectors 122 and 124 is uniformly formed in a center portion and both ends so that the unit cell 130 may be more stably supported. Further, the wobbling and slipping phenomenon which may be generated when the plurality of unit cells 130 is laminated may be prevented.

The sealing unit 126b may be formed on both surfaces of the filling unit 126a by performing a screen printing process using a sticker type or adhesive type sealing member.

Further, the sealing unit 126b may be formed on both surfaces of the filling unit 126a by performing a dispenser process of squeezing an elastic sealing member injected into a syringe or a tube.

Further, the sealing unit 126b may be formed on both surfaces of the filling unit 126a by performing a coating process using a roll or a transfer plate.

Further, the sealing unit 126b may be formed on both surfaces of the filling unit 126a by performing a bonding process using an adhesive.

As described above, according to the exemplary embodiment, the coupling process of the sealing unit 126b is shortened to enhance the convenience for manufacturing the cell stack and the structural stability.

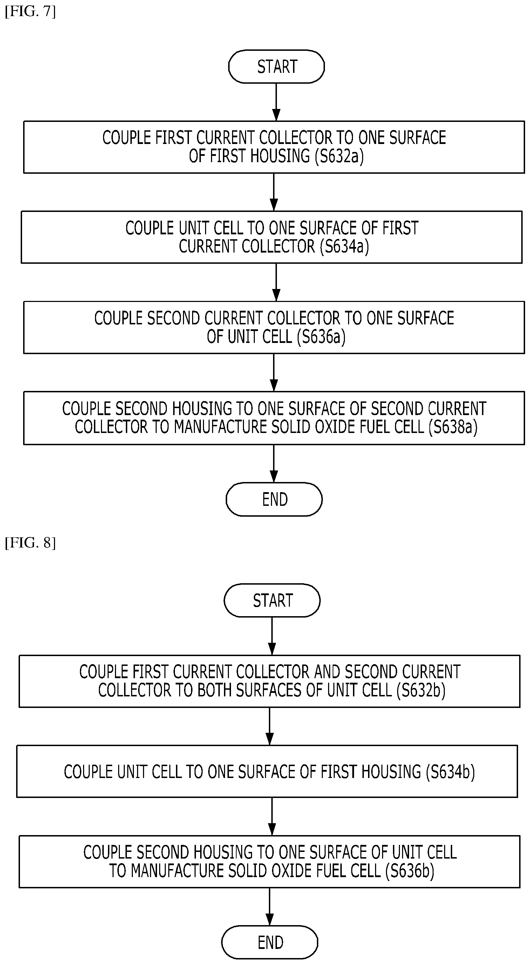

FIG. 6 is a flowchart illustrating a manufacturing method of a solid oxide fuel cell using an integrated current collector according to an exemplary embodiment of the present disclosure; and FIGS. 7 and 8 are flowcharts illustrating a manufacturing method of a solid oxide fuel cell of FIG. 6 in detail.

Referring to FIGS. 4 and 6, in step S610, a manufacturing apparatus of a solid oxide fuel cell using an integrated current collector according to an exemplary embodiment of the present disclosure may prepare a first current collector 122 and a second current collector 124 with a filling unit 126a integrally formed at both ends of a body.

In this case, at least one unit cell 130 in which a fuel electrode, an electrolyte film and an air electrode are laminated may be further prepared to be coupled with the first current collector 122 and the second current collector 124.

The first current collector 122 and the second current collector 124 are devices which collect electricity formed in at least one unit cell 130 and include the filling unit 126a integrally formed at both ends of the body.

Next, in step S620, the manufacturing apparatus of a solid oxide fuel cell using an integrated current collector according to the exemplary embodiment of the present disclosure couples the sealing unit 126b onto both surfaces of the filling unit 126a.

Here, the sealing unit 126b may be coupled onto both surfaces of the filling unit 126a using one of a bonding process, a screen printing process, and a dispenser process.

In this case, a thickness of the first current collector 122 or the second current collector 124 implemented by forming the sealing unit 126b on both surfaces of the filling unit 126a may satisfy the following Equation 1.

[Equation 1]

Thickness of first current collector 122 or second current collector 124 = Thickness of filling unit 126a + (Thickness of sealing unit 126b × 2)

That is, the thickness of the first current collector 122 or the second current collector 124 may be desirably equal to a thickness obtained by adding a thickness of the sealing unit 126b formed on a top surface of the filling unit 126a and a thickness of the sealing unit 126b formed on a bottom surface of the filling unit 126a and a thickness of the filling unit 126a.

Next, in step S630, the manufacturing apparatus of a solid oxide fuel cell using an integrated current collector according to the exemplary embodiment of the present disclosure may manufacture the solid oxide fuel cell by coupling the first current collector 122 and the second current collector 124 onto both surfaces of at least one unit cell 130.

In the meantime, according to the exemplary embodiment, in order to support at least one unit cell 130, a step of coupling a first housing 112 to the other surface of the first current collector 122 and coupling a second housing 114 to one surface of the second current collector 124 may be further included.

The housings 112 and 114 are frames used to support at least one unit cell 130 and the first housing 112 is coupled to the other surface, that is, a lower portion of the first current collector and the second housing 114 is coupled to one surface, that is, an upper portion of the second current collector 124.

Step S630 will be described in more detail below by reflecting the step of coupling the first housing 112 and the second housing 114.

According to an exemplary embodiment, referring to FIGS. 4 and 7, in step S632a, the manufacturing apparatus of a solid oxide fuel cell using an integrated current collector according to the exemplary embodiment of the present disclosure may couple the first current collector 122 onto one surface of the first housing 112, that is, a top surface.

Next, in step S634a, the manufacturing apparatus of a solid oxide fuel cell using an integrated current collector according to the exemplary embodiment of the present disclosure may couple the unit cell 130 onto one surface of the first current collector 122, that is, a top surface.

Next, in step S636a, the manufacturing apparatus of a solid oxide fuel cell using an integrated current collector according to the exemplary embodiment of the present disclosure may couple the second current collector 124 onto one surface of the unit cell 130.

Next, in step S638a, the manufacturing apparatus of a solid oxide fuel cell using an integrated current collector according to the exemplary embodiment of the present disclosure may couple the second housing 114 onto one surface of the second current collector 124 to manufacture a solid oxide fuel cell.

That is, according to the present exemplary embodiment, the first current collector 122, the unit cell 130, and the second current collector 124 are sequentially coupled between the first housing 112 and the second housing 114 to manufacture a solid oxide fuel cell.

According to another exemplary embodiment, referring to FIGS. 4 and 8, in step S632b, the manufacturing apparatus of a solid oxide fuel cell using an integrated current collector according to an exemplary embodiment of the present disclosure may couple the first current collector 122 and the second current collector 124 onto both surfaces of the unit cell 130.

Next, in step S634b, the manufacturing apparatus of a solid oxide fuel cell using an integrated current collector according to the exemplary embodiment of the present disclosure may couple the unit cell 130 onto one surface of the first housing 112, that is, a top surface.

Next, in step S636b, the manufacturing apparatus of a solid oxide fuel cell using an integrated current collector according to the exemplary embodiment of the present disclosure may couple the second housing 114 onto one surface of the unit cell 130 to manufacture a solid oxide fuel cell.

That is, according to the present exemplary embodiment, the first current collector 122 and the second current collector 124 are coupled onto both surfaces of the unit cell 130 first, and then coupled between the first housing 112 and the second housing 114.

In the above embodiments, the fuel electrode of the at least one unit cell is constituted into a hydrogen electrode, and other configurations and function are equally applied to the solid oxide water electrolysis cell. Namely, the solid oxide fuel cell reversely performs an electrochemical reaction to be used as a solid oxide electrolyzer cell (SOEC).

Although a specific exemplary embodiment of the present disclosure has been described, it should be understood that various modifications may be made therein without departing from the scope of the present disclosure. Therefore, the scope of the present disclosure should not be limited to the described embodiment, but should be determined by the claims to be described below and equivalents thereof.

**Claims**

**1.** A solid oxide fuel cell using an integrated current collector, comprising:

at least one unit cell including a fuel electrode, an electrolyte film, and an air electrode;
a first current collector and a second current collector which are provided on both surfaces of the at least one unit cell and have a filling unit integrally formed at both ends of a body; and
a sealing unit formed, by combining sealing members, on both surfaces of the filling unit,

wherein the solid oxide fuel cell is a flat tubular type, and
wherein a thickness of the first current collector or the second current collector satisfies the following Equation 1:

[Equation 1]

Thickness of first current collector or second current collector = Thickness of filling unit + (Thickness of sealing unit × 2).

2. The solid oxide fuel cell according to claim 1, further comprising:
a first housing formed on the other surface of the first current collector and a second housing formed on one surface of the second current collector to support the at least one unit cell.

3. The solid oxide fuel cell according to claim 1, wherein the filling unit and the sealing unit include a hole formed to penetrate in a thickness direction to move fuel gas flowing to the at least one unit cell therethrough, and
a hole equipped in the filling unit and a hole equipped in the sealing unit communicate with each other.

4. The solid oxide fuel cell according to claim 1, wherein the sealing unit is formed on both surfaces of the filling unit using one of a bonding process, a screen printing process, and a dispenser process.

5. A manufacturing method of a solid oxide fuel cell including at least one unit cell in which a fuel electrode, an electrolyte film, and an air electrode are laminated, wherein the solid oxide fuel cell is a flat tubular type, the manufacturing method comprising:

preparing a first current collector and a second current collector in which a filling unit is integrally formed at both ends of a body;
coupling a sealing unit, by combining sealing members, onto both surfaces of the filling unit; and
coupling the first current collector and the second current collector onto both surfaces of the at least one unit cell to manufacture the solid oxide fuel cell,
wherein a thickness of the first current collector or the second current collector satisfies the following Equation 1:

[Equation 1]

Thickness of first current collector or second current collector = Thickness of filling unit + (Thickness of sealing unit × 2).

6. The manufacturing method of a solid oxide fuel cell according to claim 5, further comprising:
coupling a first housing onto the other surface of the first current collector and coupling a second housing onto one surface of the second current collector to support the at least one unit cell.

7. The manufacturing method of a solid oxide fuel cell according to claim 5, wherein during the coupling of a sealing unit to both surfaces of the filling unit, one of a bonding process, a screen printing process, and a dispenser process is used.

**Patentansprüche**

1. Festoxid-Brennstoffzelle, die einen integrierten Stromkollektor verwendet, aufweisend:

mindestens eine Einheitszelle mit einer Brennstoffelektrode, einem Elektrolytfilm und einer Luftelektrode;
einen ersten Stromkollektor und einen zweiten Stromkollektor, die auf beiden Oberflächen der mindestens einen Einheitszelle bereitgestellt sind und eine an beiden Enden eines Körpers integral ausgebildete Fülleinheit aufweisen; und
eine Dichtungseinheit, die durch die Kombination von Dichtungselementen auf beiden Oberflächen der Fülleinheit ausgebildet ist,
wobei die Festoxid-Brennstoffzelle ein flacher, röhrenförmiger Typ ist, und
wobei eine Dicke des ersten Stromkollektors oder des zweiten Stromkollektors die folgende Gleichung 1 erfüllt:

[Gleichung 1]

Dicke des ersten Stromkollektors oder des zweiten Stromkollektors = Dicke der Fülleinheit +

(Dicke der Dichtungseinheit × 2).

2. Festoxid-Brennstoffzelle nach Anspruch 1, ferner aufweisend:
ein erstes Gehäuse, das auf der anderen Oberfläche des ersten Stromkollektors ausgebildet ist, und ein zweites Gehäuse, das auf einer Oberfläche des zweiten Stromkollektors ausgebildet ist, um die mindestens eine Einheitszelle zu tragen.

3. Festoxid-Brennstoffzelle nach Anspruch 1, wobei die Fülleinheit und die Dichtungseinheit ein Loch aufweisen, das so ausgebildet ist, dass es in einer Dickenrichtung durchdringt, um Brenngas, das zu der mindestens einen Einheitszelle strömt, hindurch zu bewegen, und ein in der Fülleinheit bereitgestelltes Loch und ein in der Dichtungseinheit bereitgestelltes Loch miteinander in Verbindung stehen.

4. Festoxid-Brennstoffzelle nach Anspruch 1, wobei die Dichtungseinheit auf beiden Oberflächen der Fülleinheit unter Verwendung eines Bondingprozesses, eines Siebdruckprozesses oder eines Dispenserprozesses ausgebildet ist.

5. Herstellungsverfahren einer Festoxid-Brennstoffzelle mit mindestens einer Einheitszelle, in der eine Brennstoffelektrode, ein Elektrolytfilm und eine Luftelektrode laminiert sind, wobei die Festoxid-Brennstoffzelle ein flacher, röhrenförmiger Typ ist, wobei das Herstellungsverfahren aufweist:

Herstellen eines ersten Stromkollektors und eines zweiten Stromkollektors, bei denen eine Fülleinheit an beiden Enden eines Körpers integral ausgebildet ist;
Ankoppeln einer Dichtungseinheit, durch Kombinieren von Dichtungselementen, an beide Oberflächen der Fülleinheit; und
Ankoppeln des ersten Stromkollektors und des zweiten Stromkollektors an beide Oberflächen der mindestens einen Einheitszelle zur Herstellung der Festoxid-Brennstoffzelle,
wobei eine Dicke des ersten Stromkollektors oder des zweiten Stromkollektors die folgende Gleichung 1 erfüllt:

[Gleichung 1]

Dicke des ersten Stromkollektors oder des zweiten Stromkollektors = Dicke der Fülleinheit +

(Dicke der Dichteinheit × 2).

6. Herstellungsverfahren einer eine Festoxid-Brennstoffzelle nach Anspruch 5, ferner aufweisend:
Ankoppeln eines ersten Gehäuses an die andere Oberfläche des ersten Stromkollektors und Ankoppeln eines zweiten Gehäuses an eine Oberfläche des zweiten Stromkollektors, um die mindestens eine Einheitszelle zu tragen.

7. Herstellungsverfahren einer Festoxid-Brennstoffzelle nach Anspruch 5, bei dem während des Ankoppeln einer Dichtungseinheit an beide Oberflächen der Fülleinheit ein Bondingprozess, ein Siebdruckprozess oder ein Dispenserprozess verwendet wird.

**Revendications**

1. Pile à combustible à oxyde solide utilisant un collecteur de courant intégré, comprenant :

au moins une cellule unitaire comprenant une électrode de combustible, un film d'électrolyte et une électrode d'air ;
un premier collecteur de courant et un deuxième collecteur de courant qui sont prévus sur les deux surfaces de ladite au moins une cellule unitaire et ont une unité de remplissage formée intégralement aux deux extrémités d'un corps ; et
une unité d'étanchéité formée, en combinant des éléments d'étanchéité, sur les deux surfaces de l'unité de remplissage,

dans laquelle la pile à combustible à oxyde solide est de type tubulaire plat, et
dans laquelle une épaisseur du premier collecteur de courant ou du deuxième collecteur de courant satisfait à l'Équation 1 suivante :

```
[Équation 1]

Épaisseur du premier collecteur de courant ou du
deuxième collecteur de courant = Épaisseur de l'unité de
remplissage + (Épaisseur de l'unité d'étanchéité x 2).
```

2. Pile à combustible à oxyde solide selon la revendication 1, comprenant en outre :
un premier boîtier formé sur l'autre surface du premier collecteur de courant et un deuxième boîtier formé sur une surface du deuxième collecteur de courant pour soutenir ladite au moins une cellule unitaire.

3. Pile à combustible à oxyde solide selon la revendication 1, dans laquelle l'unité de remplissage et l'unité d'étanchéité comprennent un trou formé pour pénétrer dans une direction d'épaisseur afin de faire passer du gaz combustible s'écoulant vers ladite au moins une cellule unitaire, et
un trou équipé dans l'unité de remplissage et un trou équipé dans l'unité d'étanchéité communiquent l'un avec l'autre.

4. Pile à combustible à oxyde solide selon la revendication 1, dans laquelle l'unité d'étanchéité est formée sur les deux surfaces de l'unité de remplissage en utilisant l'un parmi un processus de liaison, un processus de sérigraphie et un processus de distributeur.

5. Procédé de fabrication d'une pile à combustible à oxyde solide comprenant au moins une cellule unitaire dans laquelle une électrode de combustible, un film d'électrolyte et une électrode d'air sont laminés, où la pile à combustible à oxyde solide est de type tubulaire plat, le procédé de fabrication comprenant :

la préparation d'un premier collecteur de courant et d'un deuxième collecteur de courant dans lesquels une unité de remplissage est intégralement formée aux deux extrémités d'un corps ;
le couplage d'une unité d'étanchéité, en combinant des éléments d'étanchéité, sur les deux surfaces de l'unité de remplissage ; et
le couplage du premier collecteur de courant et du deuxième collecteur de courant sur les deux surfaces de ladite au moins une cellule unitaire pour fabriquer la pile à combustible à oxyde solide,
dans lequel une épaisseur du premier collecteur de courant ou du deuxième collecteur de courant satisfait à l'Équation 1 suivante :

```
[Équation 1]

Épaisseur du premier collecteur de courant ou du
deuxième collecteur de courant = Épaisseur de l'unité de
remplissage + (Épaisseur de l'unité d'étanchéité x 2).
```

6. Procédé de fabrication d'une pile à combustible à oxyde solide selon la revendication 5, comprenant en outre :
le couplage d'un premier boîtier sur l'autre surface du premier collecteur de courant et le couplage d'un deuxième boîtier sur une surface du deuxième collecteur de courant pour soutenir ladite au moins une cellule unitaire.

7. Procédé de fabrication d'une pile à combustible à oxyde solide selon la revendication 5, dans lequel, pendant le couplage d'une unité d'étanchéité aux deux surfaces de l'unité de remplissage, l'un parmi un processus de liaison, un processus de sérigraphie et un processus de distributeur est utilisé.

[FIG. 1]

124    126b 126a 126b

130

126b  126a 126b

122

[FIG. 2]

122,124    126a,126b

[FIG. 3]

Glass selant — 126b
Spacer — 126a
Glass selant — 126b

[FIG. 4]

100

A

[FIG. 5A]

_A_

122, 124

| | | |
|---|---|---|
| | Glass selant | h1 |
| h | Spacer | h2 |
| | Glass selant | h1 |

[FIG. 5B]

A

Current collector
(metallic foam type) 122, 124

| | | |
|---|---|---|
| | Glass sealant | h1 |
| h | Spacer | h2 |
| | Glass sealant | h1 |

Current collector
(metallic foam type)

[FIG. 5C]

**B**

Current collector
(metallic foam type)   122, 124

| | |
|---|---|
| | Glass sealant |
| **h** | Spacer |
| | Glass sealant |

h1

h2

h1

[FIG. 6]

START

PREPARE FIRST CURRENT COLLECTOR AND SECOND CURRENT COLLECTOR WITH FILLING UNIT INTEGRALLY FORMED AT BOTH ENDS OF BODY (S610)

COUPLE SEALING UNIT TO BOTH SURFACES OF FILLING UNIT (S620)

COUPLE FIRST CURRENT COLLECTOR AND SECOND CURRENT COLLECTOR TO BOTH SURFACES OF AT LEAST ONE UNIT CELL TO MANUFACTURE SOLID OXIDE FUEL CELL (S630)

END

[FIG. 7]

```
                          ┌─────────┐
                          │  START  │
                          └────┬────┘
                               │
                               ▼
   ┌──────────────────────────────────────────────────────┐
   │   COUPLE FIRST CURRENT COLLECTOR TO ONE SURFACE       │
   │           OF FIRST HOUSING (S632a)                    │
   └──────────────────────────┬───────────────────────────┘
                               │
                               ▼
   ┌──────────────────────────────────────────────────────┐
   │       COUPLE UNIT CELL TO ONE SURFACE OF FIRST        │
   │             CURRENT COLLECTOR (S634a)                 │
   └──────────────────────────┬───────────────────────────┘
                               │
                               ▼
   ┌──────────────────────────────────────────────────────┐
   │    COUPLE SECOND CURRENT COLLECTOR TO ONE SURFACE     │
   │              OF UNIT CELL (S636a)                     │
   └──────────────────────────┬───────────────────────────┘
                               │
                               ▼
   ┌──────────────────────────────────────────────────────┐
   │  COUPLE SECOND HOUSING TO ONE SURFACE OF SECOND CURRENT│
   │  COLLECTOR TO MANUFACTURE SOLID OXIDE FUEL CELL (S638a)│
   └──────────────────────────┬───────────────────────────┘
                               │
                               ▼
                          ┌─────────┐
                          │   END   │
                          └─────────┘
```

[FIG. 8]

```
                          ┌─────────┐
                          │  START  │
                          └────┬────┘
                               │
                               ▼
   ┌──────────────────────────────────────────────────────┐
   │  COUPLE FIRST CURRENT COLLECTOR AND SECOND CURRENT     │
   │  COLLECTOR TO BOTH SURFACES OF UNIT CELL (S632b)       │
   └──────────────────────────┬───────────────────────────┘
                               │
                               ▼
   ┌──────────────────────────────────────────────────────┐
   │  COUPLE UNIT CELL TO ONE SURFACE OF FIRST HOUSING (S634b)│
   └──────────────────────────┬───────────────────────────┘
                               │
                               ▼
   ┌──────────────────────────────────────────────────────┐
   │    COUPLE SECOND HOUSING TO ONE SURFACE OF UNIT CELL   │
   │      TO MANUFACTURE SOLID OXIDE FUEL CELL (S636b)      │
   └──────────────────────────┬───────────────────────────┘
                               │
                               ▼
                          ┌─────────┐
                          │   END   │
                          └─────────┘
```

**EP 3 893 300 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101503458
- US 2016372778 A1
- US 2004185321 A1